Europäisches Patentamt

European Patent Office

Office européen des brevets

(11) Numéro de publication: **0 415 810 A1**

# DEMANDE DE BREVET EUROPEEN

(21) Numéro de dépôt: **90402173.0**

(51) Int. Cl.5: **H04B 7/155**, H04B 7/26

(22) Date de dépôt: **27.07.90**

(30) Priorité: **29.08.89 FR 8911340**
**17.01.90 FR 9000488**

(43) Date de publication de la demande:
**06.03.91 Bulletin 91/10**

(84) Etats contractants désignés:
**BE DE DK ES GB IT LU NL SE**

(71) Demandeur: **MATRA COMMUNICATION**
**50, rue du Président Sadatte Creac'h Gwenn**
**F-29101 Quimper(FR)**

(72) Inventeur: **Alard, Michel**
**102 avenue du Général Leclerc**
**F-75014 Paris(FR)**
Inventeur: **Mouly, Michel**
**49 rue Louise Bruneau**
**F-91120 Palaiseau(FR)**

(74) Mandataire: **Fruchard, Guy et al**
**CABINET BOETTCHER 23, rue la Boétie**
**F-75008 Paris(FR)**

(54) **Réseau de communication radio-téléphonique.**

(57) Le réseau selon l'invention comporte au moins une station centrale téléphonique (1), au moins une base de transmission fixe (2) reliée à la station centrale téléphonique pour assurer un interface radio-téléphonique et communiquer avec des stations mobiles (6) selon une liaison radio, et au moins une station répétitrice (7) associée à une base de transmission (2) pour assurer une liaison radio globale avec la base de transmission et les stations mobiles.

FIG.1

EP 0 415 810 A1

La présente invention concerne un réseau de communication radio-téléphonique.

On connaît des réseaux de communication radio-téléphonique comportant une série de stations centrales téléphoniques reliées à une série de bases de transmission fixes réparties sur le territoire à couvrir par le réseau de communication et comportant chacune une pluralité d'ensembles comprenant chacun un organe d'interface radio-téléphonique, un émetteur et un récepteur pour communiquer avec les stations mobiles selon une liaison radio.

Dans les réseaux existants, les stations de transmission fixes sont généralement reliées aux stations centrales téléphoniques par des câbles.

L'implantation d'une base de transmission implique un certain nombre de contraintes, en particulier la disposition d'un site suffisamment élevé pour l'installation des antennes et d'un local à proximité pour l'installation des organes constituant la base de transmission. Ces contraintes sont particulièrement difficiles à satisfaire dans les villes où la présence de nombreux immeubles implique l'implantation d'une base de transmission sur les immeubles les plus élevés et où l'acquisition ou la location d'un local sont particulièrement onéreuses. De plus, l'implantation d'une base de transmission au sommet d'un immeuble implique le passage des câbles téléphoniques à travers l'ensemble de l'immeuble, prolongé par une liaison souterraine. Pour résoudre ce dernier problème, on a envisagé d'assurer une liaison radio entre la station centrale téléphonique et la base de transmission. Toutefois, cette solution ne résoud pas le problème de la disposition d'un local dans l'immeuble sur lequel les antennes doivent être installées.

Par ailleurs, on cherche actuellement de plus en plus à réduire le volume et le coût des stations mobiles afin que celles-ci puissent être utilisées par un plus grand nombre d'utilisateurs. Une telle réduction du volume et du coût des stations mobiles implique une réduction de leur puissance et donc de leur portée. Il est alors nécessaire de multiplier le nombre de cellules formant le territoire à couvrir par le réseau de communication et, par voie de conséquence, le nombre de bases de transmission associées aux cellules. Les problèmes qui ont été évoqués ci-dessus à propos de l'implantation d'une base de transmission rendent pratiquement impossible la mise en place d'un réseau de communication de faible puissance dans des zones urbaines déjà constituées, au moyen des dispositifs existants.

Un but de la présente invention est de proposer un réseau de communication radio-téléphonique minimisant les problèmes d'implantation des bases de transmission.

En vue de la réalisation de ce but, on prévoit selon l'invention, un réseau de communication radio-téléphonique comportant au moins une station centrale téléphonique, au moins une base de transmission fixe reliée à la centrale téléphonique pour assurer un interface radio-téléphonique et communiquer avec des stations mobiles selon une liaison radio, et au moins une station répétitrice associée à une base de transmission pour assurer une liaison radio globale avec la base de transmission et les stations mobiles.

Par liaison radio globale, on entend une liaison radio transmettant l'ensemble d'une gamme de fréquences sur laquelle s'effectuent les différentes communications.

Selon une version avantageuse, une station répétitrice comporte un organe émetteur - récepteur pour la communication avec la base de transmission, cet organe émetteur-récepteur étant relié à une ligne d'émission de signaux radio vers les stations mobiles et à une ligne de réception de signaux radio en provenance des stations mobiles, ces deux lignes étant reliées à un oscillateur commun pour assurer une transposition de fréquence porteuse entre la communication de la station répétitrice avec la base de transmission et avec les stations mobiles et à un organe émetteur et récepteur pour la liaison avec les stations mobiles.

Les stations répétitrices sont ainsi réalisées avec un nombre d'organes très réduit pouvant être disposés dans un boîtier de faible encombrement associé à un mât portant les antennes sur le toit d'un immeuble. L'implantation d'une station répétitrice ne nécessite donc plus la disposition d'un local ni de câblage traversant l'immeuble, la station répétitrice étant alimentée par une batterie ou par un raccordement au réseau électrique habituel desservant l'immeuble, et permet donc de multiplier sans difficulté les sites envisagés.

Par ailleurs, dans le cas d'une station répétitrice traitant une liaison radio à plusieurs canaux, il existe généralement entre les signaux reçus de la part des mobiles une différence de niveau dynamique extrêmement importante qui, pour un traitement par un organe de transposition et d'amplification unique, nécessite une puissance très importante au niveau de la station répétitrice.

Selon un autre aspect de l'invention, on propose un réseau de communication téléphonique dans lequel la station répétitrice comporte un organe émetteur-récepteur pour communiquer avec la base de transmission, relié à une ligne d'émission de signaux radio vers les stations mobiles et une ligne de réception de signaux radio en provenance des stations mobiles ; la ligne d'émission comportant une série de canaux comprenant chacun, selon un sens de propagation des signaux, un organe sélecteur de bande de fréquences, un organe de transposition de fréquence porteuse et un amplificateur relié à un organe de couplage commun aux canaux, cet organe de couplage étant relié à un organe émetteur ; la ligne de réception comportant, selon un sens de propagation des signaux, un organe récepteur, un préamplificateur, une série de canaux comprenant chacun un organe sélecteur de bande, un organe de contrôle de gain associé à un amplificateur à gain variable, et un organe de transposition de fréquence porteuse relié à un organe de couplage commun aux canaux, lui-même relié à l'organe émetteur-récepteur ; les organes de transposition de fréquence porteuse de la ligne d'émission et de la ligne de réception étant reliés par paires à un même oscillateur local.

Ainsi la gamme de fréquences traitée par chaque canal est réduite et les signaux radio en provenance des stations mobiles sont ramenés par les organes de contrôle de gain sensiblement au même niveau dynamique avec une consommation de puissance moindre.

Selon un aspect préféré de l'invention dans le cas où les organes de contrôle de gain sont trop lents pour assurer une transmission satisfaisante de signaux ayant des écarts dynamiques importants et rapides, on prévoit, selon une version préférée de l'invention, une station répétitrice comportant un organe émetteur-récepteur pour communiquer avec la base de transmission, relié à une ligne d'émission de signaux radio vers les stations mobiles et une ligne de réception de signaux radio en provenance des stations mobiles ; dans laquelle la ligne d'émission comporte, selon un sens de propagation des signaux, un récepteur, un organe d'extraction de bits modulants associé à une série de canaux comportant chacun un organe de modulation, un organe de transposition de fréquence porteuse et un amplificateur relié à un organe de couplage commun aux canaux, cet organe de couplage étant relié à un organe émetteur ; la ligne de réception comportant, selon un sens de propagation des signaux, un organe récepteur, un préamplificateur, une série de canaux comprenant chacun un sous-ensemble de traitement comportant un organe de filtrage et de transposition de fréquence porteuse, un organe d'amplification comprenant des éléments d'amplification à gain fixe montés en parallèle, un organe de conversion analogique-numérique, et une unité de traitement numérique pour générer des bits à décision pondérée à partir de signaux numériques en provenance de l'organe de conversion analogique-numérique, ce sous-ensemble de traitement comportant en outre, entre l'organe de conversion analogique-numérique et l'unité de traitement numérique, des moyens de mise en mémoire de signaux à différents niveaux de gain, des moyens pour relire ces signaux, sélectionner un niveau de gain adapté à l'unité de traitement numérique, et transmettre à l'unité de traitement numérique des signaux mémorisés à ce niveau de gain ; les canaux étant reliés à un organe de multiplexage associé à un émetteur relié à l'organe émetteur ; les organes de transposition de fréquence porteuse de la ligne d'émission et de la ligne de réception étant reliés par paires à un oscillateur local commun, et l'organe d'extraction de bits modulants étant relié à l'émetteur et au sous-ensemble de traitement de chaque canal de la ligne de réception pour assurer un transfert d'informations de contrôle et de synchronisation.

D'autre part, dans les bases de transmission actuelles, même lorsque celles-ci sont implantées dans des régions à très faible densité de communications (en particulier les zones rurales), il est nécessaire de prévoir pour chaque base de transmission au moins deux ensembles émetteur-récepteur - interface radio-téléphonique, l'un de ces ensembles étant utilisé pour le fonctionnement normal et l'autre ensemble étant prévu en cas de panne du premier ensemble, l'ensemble en service n'étant pas utilisé à sa capacité maximale. Cette disposition est particulièrement coûteuse.

Selon un autre aspect de l'invention, on prévoit d'associer plusieurs stations répétitrices à une même base de transmission, le nombre d'ensembles émetteur-récepteur - organe d'interface radio-téléphonique étant déterminé en fonction du nombre de communications devant être assurées par la base de transmission et toutes les stations répétitrices qui lui sont associées. On assure ainsi la couverture d'un territoire avec un nombre d'ensembles émetteur-récepteur -organe d'interface radio-téléphonique beaucoup plus réduit qu'avec les bases de transmission séparées existantes.

De préférence, lorsque la disponibilité des fréquences de communication le permet, on assure la communication des stations répétitrices avec la base de transmission et avec les stations mobiles dans une même gamme de fréquences porteuses. Ainsi, on réduit encore le coût de l'installation.

D'autres caractéristiques et avantages de l'invention apparaîtront à la lecture de la description qui suit de modes de réalisation particuliers non limitatifs de l'invention en liaison avec les figures ci-jointes parmi lesquelles :

- la figure 1 est une représentation schématique d'un réseau de communication radio-téléphonique selon l'invention,
- la figure 2 est une représentation schématique de la structure d'une station répétitrice selon l'invention,
- la figure 3 est une représentation schématique d'une variante de réseau de communication radio-téléphonique selon l'invention,
- la figure 4 est une représentation schématique d'un second mode de réalisation de station répétitrice selon l'invention,

- la figure 5 est une représentation schématique d'un troisième mode de réalisation de station répétitrice selon l'invention,
- la figure 6 est une représentation de détail d'une partie du dispositif de la figure 5,
- la figure 7 est une représentation de détail d'une partie du dispositif de la figure 6.

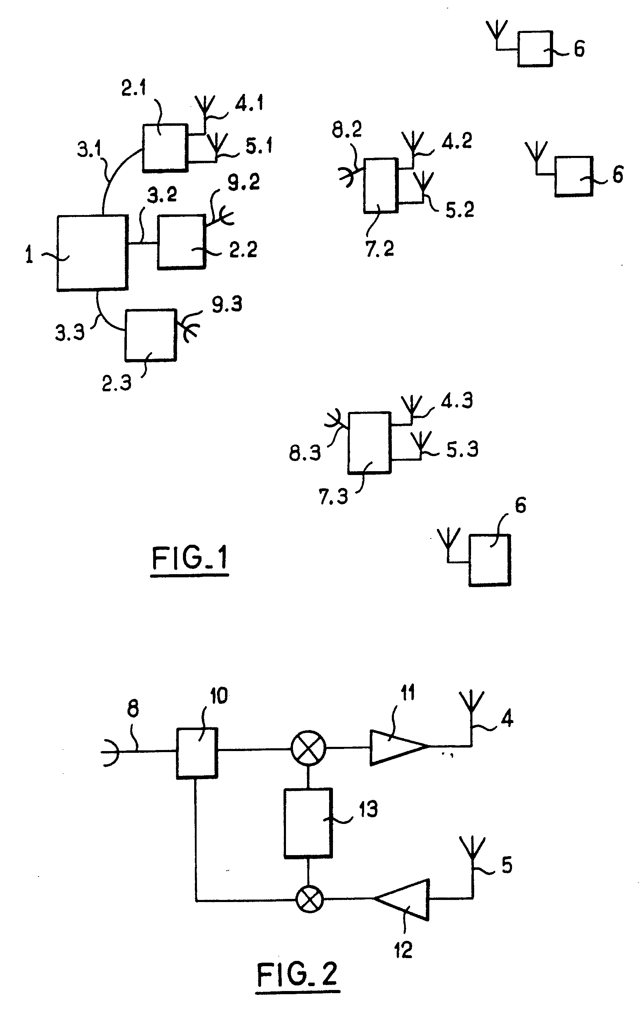

En référence aux figures 1 et 2, le réseau de communication radio-téléphonique selon l'invention comporte une station centrale téléphonique 1 reliée à des bases de transmission fixes 2 par des câbles réléphoniques 3. Dans le mode de réalisation illustré, la base de transmission 2.1 a une structure classique et est équipée d'une antenne émettrice 4.1 et d'une antenne réceptrice 5.1 pour communiquer directement avec des stations mobiles 6. Au contraire, selon l'invention, les bases de transmission 2.2 et 2.3 sont associées à une station répétitrice 7, respectivement 7.2 et 7.3.

Les stations répétitrices 7 sont en liaison radio avec la base de transmission à laquelle elles sont associées, par exemple au moyen d'une antenne émettrice-réceptrice 8 portée par la station répétitrice et une antenne émettrice-réceptrice 9 portée par la base de transmission. La station répétitrice et la base de transmission étant fixes, on utilisera de préférence des antennes très directionnelles. L'antenne émettrice-réceptrice 8 d'une station répétitrice (voir figure 2) est reliée par l'intermédiaire d'un organe de duplexage 10 à une ligne d'émission 11 de signaux radio vers les stations mobiles et une ligne de réception 12 des signaux radio en provenance des stations mobiles, ces deux lignes étant reliées à un oscillateur commun 13 pour assurer une transposition de fréquence porteuse entre la communication de la station répétitrice avec la base de transmission et avec les stations mobiles. La ligne d'émission 11 est en outre équipée d'une antenne émettrice 4, respectivement 4.2 pour la station répétitrice 7.2 et 4.3 pour la station répétitrice 7.3, tandis que la ligne de réception 12 est reliée à une antenne réceptrice 5, respectivement 5.2 pour la station répétitrice 7.2 et 5.3 pour la station répétitrice 7.3, pour la communication avec les stations mobiles.

On remarquera que la station répétitrice n'assure aucun traitement des signaux de communication transmis et assure une répétition globale du signal radio, le seul traitement étant la transposition de la gamme de fréquences porteuses, par exemple voisines de 38 GHz pour la communication avec la base de transmission à une gamme de fréquences, par exemple voisines de 2 GHz, pour la transmission avec des stations mobiles, et de préférence une amplification des signaux radio répétés, le passage à 38 GHz pour la communication entre la station répétitrice et la base de transmission ayant simplement pour fonction d'économiser les fréquences disponibles au voisinage de 2 GHz pour la communication avec les stations mobiles.

On remarquera qu'en plus de la facilité d'implantation d'une station répétitrice qui a déjà été soulignée ci-dessus, le réseau de communication radio-téléphonique selon l'invention présente en outre l'avantage de permettre un regroupement des bases de transmission dans un même local, qui peut d'ailleurs être le même local que celui dans lequel est implantée la station centrale téléphonique, de sorte que les bases de transmission peuvent utiliser certains organes en commun. De plus, les interventions d'entretien ou de réparation sur les bases de transmission sont facilitées par leur regroupement.

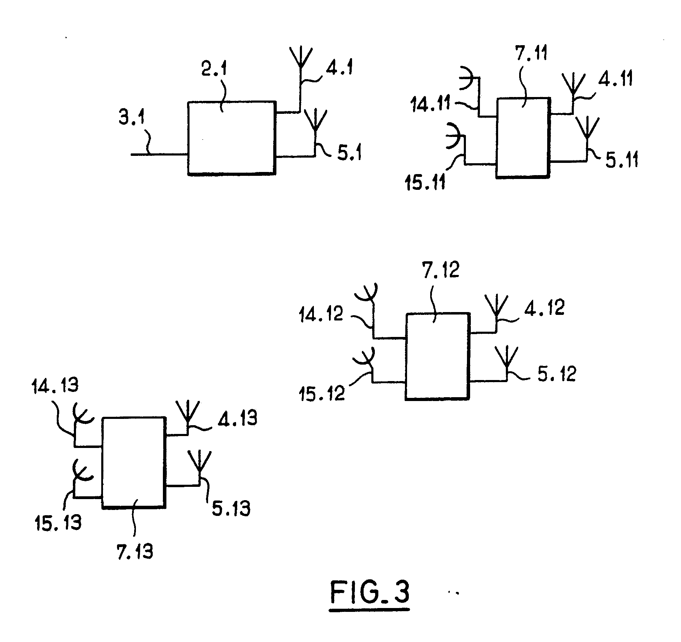

La figure 3 illustre une variante de réalisation destinée à couvrir un territoire sur lequel le faible nombre de communications ne justifie pas l'utilisation d'une base de transmission pour chaque cellule, c'est-à-dire pour chaque zone élémentaire du territoire, et où le nombre de fréquences disponibles dans une même gamme de fréquence, par exemple au voisinage de 2 GHz, est élevé par rapport au nombre de fréquences nécessaires pour assurer la communication avec les stations mobiles (non représentées).

Dans ce cas, la base de transmission 2.1 est associée à plusieurs stations répétitrices 7.11 ; 7.12 et 7.13. La base de transmission comporte une antenne émettrice omnidirectionnelle 4.1 et une antenne réceptrice omnidirectionnelle 5.1 qui lui permettent de communiquer soit directement avec une station mobile lorsque celle-ci se trouve à proximité de la base de transmission, soit avec l'une des stations répétitrices qui sont équipées pour cela d'antennes réceptrices directionnelles 14, respectivement 14.11 ; 14.12 et 14.13, et d'antennes émettrices directionnelles 15, respectivement 15.11 ; 15.12 et 15.13, tournées vers la base de transmission.

Lorsque des signaux sont émis par la base de transmission, ceux-ci sont reçus par les stations mobiles disposées dans le rayon de transmission directe de la base de transmission, et par toutes les stations répétitrices qui assurent une répétition avec un décalage de fréquence porteuse spécifique à chaque station répétitrice afin de ne pas créer un brouillage pour une station mobile se trouvant dans le champ de transmission de deux stations répétitrices voisines.

De la même façon, tous les signaux reçus par les stations répétitrices à un instant donné sont retransmis avec un décalage de fréquence porteuse vers la base de transmission, celle-ci ne recevant réellement que les signaux à la fréquence sur laquelle la base de transmission est calée à cet instant.

On remarquera que dans ce mode de réalisation, on économise non seulement un certain nombre d'ensembles émetteur-récepteur - organe d'interface radio-téléphoniques qui auraient dû être mis en place dans des bases de transmission traditionnelles réparties sur le territoire, mais également les organes de communication à fréquence élevée (par exemple 38 GHz) prévus dans le dispositif des figures 1 et 2. En revanche, ce mode de réalisation utilise plus de fréquences dans la gamme de fréquences considérée.

A titre d'exemple, un territoire comprenant sept cellules, une cellule centrale entourée de six cellules périphériques, où chaque cellule a un nombre d'ERLANG égal à deux, est couvert selon un réseau traditionnel par sept bases de transmission comprenant chacune un ensemble émetteur-récepteur - organe d'interface radio-téléphonique normal à huit canaux et un ensemble de secours, soit quatorze ensembles. Le nombre total d'ERLANG étant de quatorze sur tout le territoire, celui-ci pourra être couvert par une base de transmission comportant seulement cinq ensembles émetteur-récepteurs - organe d'interface radio-téléphonique (quatre normaux et un de secours), cette base étant associée à six stations répétitrices.

Dans le cas où le nombre de communications à assurer justifie l'association d'une base de transmission à plusieurs stations répétitrices sans que le nombre de fréquences disponibles dans une même gamme soit suffisant pour assurer la liaison entre la base de transmission et les stations répétitrices, cette liaison est assurée à une fréquence différente, par exemple 38 GHz, la base de transmission et les stations répétitrices étant alors équipées des organes nécessaires à cette transmission.

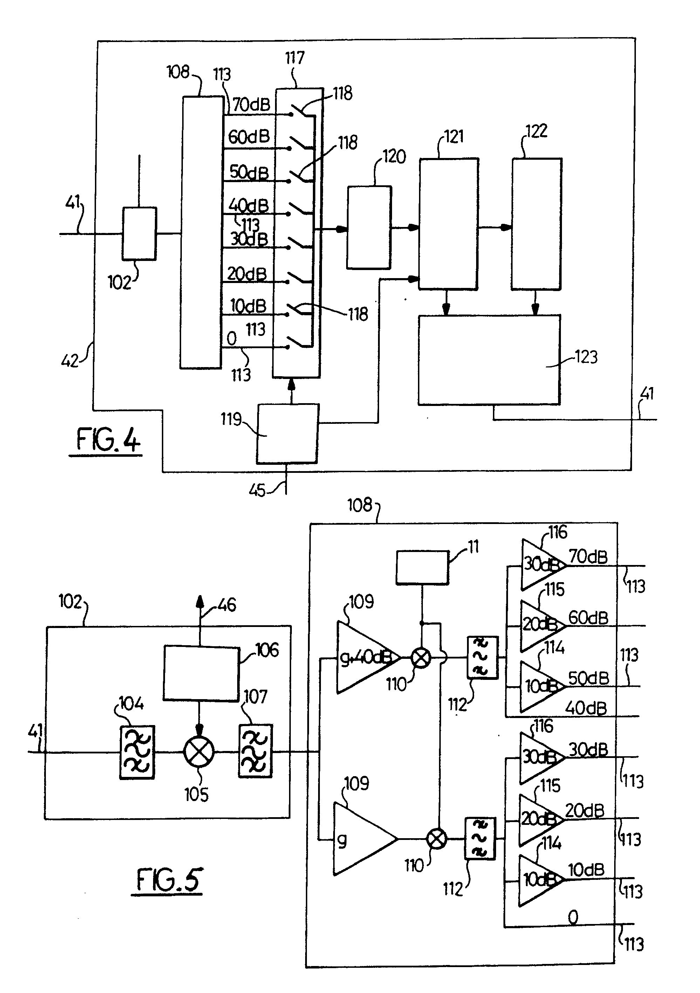

En référence à la figure 4, la station répétitrice 7 comporte, comme dans le premier mode de réalisation, un organe émetteur-récepteur 8 pour communiquer avec la base de transmission, relié à une ligne d'émission, généralement désignée en 11, de signaux radio vers les stations mobiles, et à une ligne de réception, généralement désignée en 12, de signaux radio en provenance des stations mobiles, par l'intermédiaire d'un organe de duplexage 10. La ligne d'émission 11 comporte une série de canaux 21 dont deux seulement ont été représentés sur la figure 4, comprenant chacun, selon un sens de propagation des signaux, un organe sélecteur de bande de fréquences 22, un organe de transposition de fréquence porteuse 23 et un amplificateur 24 relié à un organe de couplage 25 commun aux différents canaux, cet organe de couplage 25 étant relié à un organe émetteur 4.

La ligne de réception 12 comporte, selon un sens de propagation des signaux, un organe récepteur 5 et un préamplificateur 26 reliés à une série de canaux 27 dont deux seulement ont été représentés sur la figure 4. Chaque canal 27 comprend un organe sélecteur de bande 28 relié à un organe de contrôle de gain 29 associé à un amplificateur à gain variable 30. L'amplificateur à gain variable 30 est lui-même relié à un organe de transposition de fréquence porteuse 31 relié à un organe de couplage 32 commun aux différents canaux 27, cet organe de couplage étant lui-même relié à l'organe émetteur-récepteur 8 par l'intermédiaire de l'organe de duplexage 10. Les organes de transposition de fréquence porteuse, 23 pour la ligne d'émission,11 et 31 pour la ligne de réception 12, sont reliés par paires à un même oscillateur local 13.

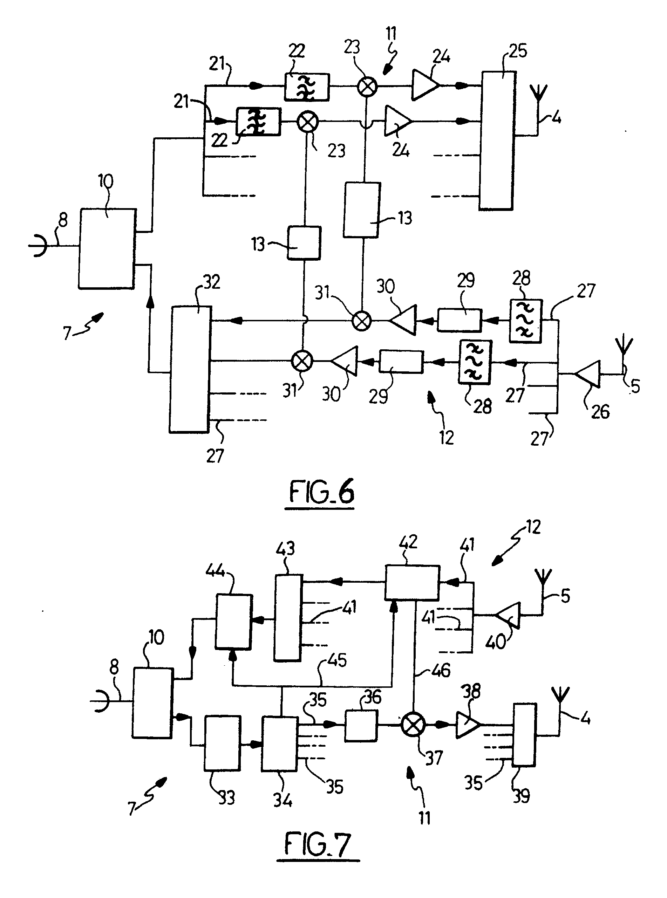

En référence aux figures 5 à 7, la station répétitrice 7 selon le mode de réalisation préféré de l'invention comporte de la même façon que dans le cas de la figure 4 un organe émetteur-récepteur 8 associé à une ligne d'émission 11 et une ligne de réception 12 par l'intermédiaire d'un duplexeur 10. La ligne d'émission 11 comporte cette fois, selon un sens de propagation des signaux, un récepteur 33 relié à un organe d'extraction de bits modulants 34 associé à une série de canaux 35 dont un seul a été illustré sur la figure 5. Chaque canal 35 comporte un organe de modulation 36, un organe de transposition de fréquence porteuse 37 et un amplificateur 38 relié à un organe de couplage 39 commun aux différents canaux et lui-même relié à l'organe émetteur 4.

La ligne de réception 12 comporte, selon un sens de propagation des signaux, un organe récepteur 5 relié à un préamplificateur 40 associé à une série de canaux 41 dont un seul a été représenté sur la figure 5. Chaque canal 41 comporte un sous-ensemble de traitement 42 relié à un organe de multiplexage 43 commun aux différents canaux lui-même relié à un émetteur 44 relié à l'organe émetteur-récepteur 8 par l'intermédiaire de l'organe de duplexage 10. L'organe d'extraction de bits modulants 34 est également relié par une ligne 45 au sous-ensemble de traitement 42 et à l'émetteur 44 afin de transmettre à ceux-ci les informations de contrôle et de synchronisation nécessaires à leur fonctionnement.

Le sous-ensemble de traitement 42 est représenté plus en détail sur les figures 6 et 7. Ce sous-ensemble de traitement comprend un organe de filtrage et de transposition de fréquences porteuses 102 comportant un premier filtre de bande 104 (figure 7) destiné à sélectionner la bande de fréquences correspondante du canal 41. La sortie du filtre de bande 104 est reliée à une entrée d'un organe de transposition de fréquence porteuse formé par un mélangeur 105 ayant une autre entrée reliée à un oscillateur local 106 dont une deuxième sortie est reliée par une ligne 46 à l'organe de transposition de fréquence porteuse 37 de la ligne d'émission 11. Un filtre 107 centré sur la fréquence de l'oscillateur local 106 et ayant une largeur de bande égale à celle du signal que l'on souhaite traiter est relié à la sortie du mélangeur 105.

La sortie de l'organe de filtrage et de transposition de fréquence porteuse 102 est reliée à un organe d'amplification 108 comportant (voir figure 7) un premier étage d'amplification comprenant deux amplificateurs à gain fixe 109 montés en parallèle.

Dans le mode de réalisation illustré , l'un des amplificateurs 109 a un gain g adapté au signal le plus puissant que l'on envisage de recevoir au niveau du sous-ensemble de traitement tandis que l'autre amplificateur 109 a un gain g plus 40 dB. Les amplificateurs 109 sont suivis de mélangeurs 110 ayant une première entrée reliée à l'un des amplificateurs 109 et une seconde entrée reliée à un oscillateur local 111 dont la fonction est d'effectuer une transposition de fréquence pour centrer le signal sur la fréquence Fb/2, Fb étant la fréquence bit du signal. Les mélangeurs 110 sont suivis par un élément de filtrage 112 destiné à éliminer les résidus. La sortie de chaque mélangeur 112 est reliée en parallèle à quatre lignes de sortie 113. Pour chaque groupe de lignes de sortie 113, l'une des lignes ne comporte aucun amplificateur, la seconde ligne comporte un amplificateur 114 ayant un gain de 10 dB, une troisième ligne comporte un amplificateur 115 ayant un gain de 20 dB et la quatrième ligne comporte un amplificateur 116 ayant un gain de 30 dB, lesquelles constituent un second étage d'amplification de l'organe d'amplification 108. Ainsi, les lignes de sortie 113 ont des niveaux d'amplification qui s'échelonnent entre 0 et 70 dB d'amplification par rapport au signal d'entrée dans l'organe d'amplification 108.

Les lignes de sortie 113 de l'organe d'amplification 108 sont reliées à l'entrée d'un échantillonneur 117 comportant une série de moyens de connexion 118 montés en parallèle et commandés par un organe de commande 119 pour établir cycliquement une connexion entre l'une des lignes 113 et un organe de conversion analogique-numérique commun 120. Dans l'exemple de réalisation décrit où l'organe de conversion est commun à tous les niveaux d'amplification, la fréquence d'échantillonnage sera de 2 Fb pour chaque ligne 113, c'est-à-dire de 16 Fb pour l'échantillonneur afin d'obtenir un échantillonnage significatif des signaux reçus.

La sortie de l'organe de conversion 120 est reliée à une entrée de moyens de mise en mémoire 121 dont une autre entrée est reliée à l'organe de commande 119 afin d'affecter à chaque échantillon reçu de l'organe de conversion 120 une adresse en correspondance avec la ligne 113 associée à l'échantillon mémorisé. Les moyens de mise en mémoire 121 sont reliés à des moyens de sélection de signaux mémorisés 122 qui effectuent une lecture de l'ensemble des échantillons d'un paquet mémorisé pour chaque niveau d'amplification et une sélection du niveau d'amplification le mieux adapté en fonction de critères introduits au niveau des moyens de sélection, par exemple le niveau moyen d'énergie ou le nombre d'écrétages.

Par ailleurs, les moyens de mise en mémoire 121 et les moyens de sélection de signaux mémorisés 122 sont reliés à une unité de traitement numérique 123 de sorte qu'après avoir déterminé le niveau d'amplification le plus adapté au paquet qui vient d'être reçu, les moyens de sélection de signaux mémorisés transmettent à l'unité de traitement numérique l'information sur le niveau d'amplification et provoquent simultanément le transfert depuis les moyens de mise en mémoire 121 vers l'unité de traitement numérique 123 de l'ensemble des échantillons recueillis à ce niveau d'amplification.

On remarquera que pour chaque paquet, la sélection du niveau d'amplification est effectuée après mémorisation de l'ensemble des bits d'un paquet. La sélection est donc effectuée non seulement sur les bits non significatifs d'un paquet, mais également sur les bits significatifs de sorte que la sélection est d'une très grande qualité. De plus, étant effectué sur chaque paquet reçu la sélection est particulièrement adaptée même lorsque le niveau du signal reçu varie d'une façon importante d'un paquet à un autre.

L'unité de traitement numérique 23 effectue une égalisation des bits reçus selon des procédés conventionnels et délivre des bits décodés en décision pondérée qui sont transmis à l'organe de multiplexage 43. On notera à ce propos que l'opération d'égalisation est une opération de traitement partielle qui ne nécessite ni une installation très complexe ni une grande puissance et peut donc être aisément traitée dans une station répétitrice.

Bien entendu l'invention n'est pas limitée au mode de réalisation décrit et on peut y apporter des variantes de réalisation sans sortir du cadre de l'invention. En particulier, bien que les stations répétitrices de la figure 2 aient été décrites avec l'organe émetteur-récepteur comportant une antenne émettrice-réceptrice unique associée à un duplexeur pour assurer la liaison entre la station répétitrice et la base de transmission associée, cette antenne unique pourrait être remplacée par une antenne émettrice et une antenne réceptrice respectivement associées à la ligne d'émission et à la ligne de réception de la station répétitrice, comme illustré par la figure 3, la base de transmission étant alors elle-même équipée d'une antenne émettrice et d'une antenne réceptrice.

## Revendications

1. Réseau de communication radio-téléphonique comportant au moins une station centrale téléphonique (1), au moins une base de transmission fixe (2) reliée à la station centrale téléphonique pour assurer un interface radio-téléphonique et communiquer avec des stations mobiles (6) selon une liaison radio, caractérisé en ce qu'il comporte au moins une station répétitrice (7) associée à une base de transmission (2) pour assurer une liaison radio globale avec la base de transmission et les stations mobiles.

2. Réseau de communication radio-téléphonique selon la revendication 1, caractérisé en ce que la station répétitrice (7) comporte un organe émetteur-récepteur (8) pour la communication avec la base de transmission, cet organe émetteur-récepteur étant relié à une ligne d'émission (11) de signaux radio vers les stations mobiles et une ligne de réception (12) de signaux radio en provenance des stations mobiles, ces deux lignes étant reliées à un oscillateur commun (13) pour assurer une transposition de fréquence porteuse entre la communication de la station répétitrice avec la base de transmission et avec les stations mobiles, et à un organe émetteur (4) et récepteur (5) pour la liaison avec les stations mobiles.

3. Réseau de communication radio-téléphonique selon la revendication 1 ou la revendication 2, caractérisé en ce qu'il comporte plusieurs stations répétitrices (7.11, 7.12, 7.13) associées à une même base de transmission.

4. Réseau de communication radio-téléphonique selon l'une des revendications 1 à 3, caractérisé en ce que les communications des stations répétitrices avec la base de transmission et avec les stations mobiles sont effectuées dans une même gamme de fréquences porteuses.

5. Réseau de communication radio-téléphonique selon la revendication 1, caractérisé en ce que la station répétitrice (7) comporte un organe émetteur-récepteur (8) pour communiquer avec la base de transmission, relié à une ligne d'émission (11) de signaux radio vers les stations mobiles et une ligne de réception (12) de signaux radio en provenance des stations mobiles ; la ligne d'émission (11) comportant une série de canaux (21) comprenant chacun, selon un sens de propagation des signaux, un organe sélecteur de bande de fréquences (22), un organe de transposition de fréquence porteuse (23) et un amplificateur (24) relié à un organe de couplage (25 commun aux canaux, cet organe de couplage étant relié à un organe émetteur (4) ; la ligne de réception (12) comportant, selon un sens de propagation des signaux, un organe récepteur (5), un préamplificateur (26), une série de canaux (27) comprenant chacun un organe sélecteur de bande (28), un organe de contrôle de gain (29) associé à un amplificateur à gain variable (30) et un organe de transposition de fréquence porteuse (31) relié à un organe de couplage (32) commun aux canaux, lui-même relié à l'organe émetteur-récepteur (8) ; les organes de transposition de fréquence porteuse (23,31) de la ligne d'émission et de la ligne de réception étant reliés par paires à un même oscillateur local (13).

6. Réseau de communication radio-téléphonique, selon la revendication 1, caractérisé en ce que la station répétitrice (7) comporte un organe émetteur-récepteur (8) pour communiquer avec la base de transmission, relié à une ligne d'émission (11) de signaux radio vers les stations mobiles et une ligne de réception (12) de signaux radio en provenance des stations mobiles ; la ligne d'émission (11) comportant, selon un sens de propagation des signaux, un récepteur (33), un organe d'extraction de bits modulants (34) associé à une série de canaux (35) comportant chacun un organe de modulation (36), un organe de transposition de fréquence porteuse (37) et un amplificateur (38) relié à un organe de couplage (39) commun aux canaux, cet organe de couplage étant relié à un organe émetteur (4) ; la ligne de réception (12) comportant, selon un sens de propagation des signaux, un organe récepteur (5), un préamplificateur (40), une série de canaux (41) comprenant chacun un sous-ensemble de traitement (42) comportant un organe de filtrage et de transposition de fréquence porteuse (102), un organe d'amplification (108) comprenant des éléments d'amplification à gain fixe (109 ; 114 ; 115,116) montés en parallèle, un organe de conversion analogique-numérique (120) et une unité de traitement numérique (123) pour générer des bits à décision pondérée à partir de signaux numériques en provenance de l'organe de conversion analogique-numérique ; le sous-ensemble de traitement comportant en outre, entre l'organe de conversion (120) et l'unité de traitement numérique (123) des moyens de mise en mémoire de signaux à différents niveaux de gain, des moyens (122) pour relire ces signaux, sélectionner un niveau de gain adapté à l'unité de traitement numérique, et transmettre à l'unité de traitement numérique des signaux mémorisés à ce niveau de gain ; les canaux (41) étant reliés à un organe de multiplexage (43) associé à un émetteur (44) relié à l'organe émetteur-récepteur (8) ; les organes de transposition de fréquences porteurs (37,105) de la ligne d'émission et de la ligne de réception étant reliés par paires à un oscillateur local commun (106) et l'organe d'extraction de bits modulants (34) étant relié à l'émetteur (44) et au sous-ensemble de traitement (42) de chaque canal de la ligne de réception (12) pour assurer un transfert d'informations de contrôle et de synchronisation.

7. Réseau de communication radio-téléphonique selon la revendication 6 caractérisé en ce que le sous-ensemble de traitement (42) comporte un organe de conversion (120) commun à plusieurs éléments d'amplification, cet organe de conversion commun étant relié aux éléments d'amplification associés par un organe de connexion (117) commandé pour établir cycliquement une connexion entre un élément d'amplification et l'organe de conversion commun (120).

8. Réseau de communication radio-téléphonique selon la revendication 6 ou la revendication 7, caractérisé en ce que l'organe d'amplification (108) comporte plusieurs étages d'amplification en séries dans chacun desquels des éléments d'amplification (109 ; 113, 114, 115) sont montés en parallèle selon une structure générale pyramidale.

FIG.1

FIG.2

FIG.3

FIG.4

FIG.5

FIG.6

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 207 395  (LICENTIA)<br>* Page 1, lignes 1-9; page 2, lignes 5-17 * | 1,3 | H 04 B  7/155<br>H 04 B  7/26 |
| Y | --- | 2 | |
| Y | US-A-3 487 310  (BATEMAN et al.)<br>* Colonne 3, lignes 9-57; figures 1-4; colonne 5, lignes 49-60 * | 2,5 | |
| A | --- | 6 | |
| X | US-A-4 528 656  (MORAIS)<br>* Abrégé; figures 1-3; colonne 5, lignes 10-66; revendication 1 * | 1,4 | |
| A | --- | 2,5,6 | |
| Y | EP-A-0 274 857  (BRITISH TELECOMS.)<br>* Colonne 4, lignes 3-51; figures 1-4,6 * | 5 | |
| A | --- | 6-8 | DOMAINES TECHNIQUES RECHERCHES (Int. Cl.5) |
| A | PATENT ABSTRACTS OF JAPAN, vol. 10, no. 27 (E-378)[2084], 4 février 1986; & JP-A-60 186 133 (TOUYOU)<br>* Abrégé *<br>---                        -/- | 1,4 | H 04 B<br>H 04 Q |

Le présent rapport a été établi pour toutes les revendications

| Lieu de la recherche | Date d'achèvement de la recherche | Examinateur |
|---|---|---|
| LA HAYE | 01-10-1990 | GOUDELIS M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen
des brevets

**RAPPORT DE RECHERCHE EUROPEENNE**

Numero de la demande

EP 90 40 2173

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | IEEI/IEICE GLOBAL TELECOMMUNICATIONS CONFERENCE 1987, Tokyo, 15-18 novembre 1987, Conference Record vol. 1, pages 174-177, IEEE, New York, US; CHAS et al.: "Applications and perspectives of ISDN multiaccess systems for rural and urban applications. A view from Spain" * Figure 1; page 1, colonne de gauche, page 3, paragraphe 5.4 * | 1-3 | |
| A | PATENT ABSTRACTS OF JAPAN, vol. 7, no. 140 (E-183)[1285], 18 juin 1983; & JP-A-58 54 742 (NIPPON DENKI) * Abrégé * | 2,5,6 | |
| A | WO-A-8 702 538  (KAWANO et al.) * Abrégé; figures 2,3; page 7, lignes 8-17 * | 5-6 | |
| A | US-A-4 783 843  (LEFF et al.) * Figure 2; colonne 3, ligne 62 - colonne 4, ligne 55 * | 5-6 | DOMAINES TECHNIQUES RECHERCHES (Int. Cl.5) |

Le présent rapport a été établi pour toutes les revendications

| Lieu de la recherche | Date d'achèvement de la recherche | Examinateur |
|---|---|---|
| LA HAYE | 01-10-1990 | GOUDELIS M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)